# EUROPÄISCHE PATENTSCHRIFT

(11) **EP 1 992 150 B1**
(45) Veröffentlichungstag und Bekanntmachung des Hinweises auf die Patenterteilung: **04.05.2011**
(21) Anmeldenummer: 07722816.1
(22) Anmeldetag: 14.02.2007
(51) Int. Cl.: H04M 1/60, H04M 1/725, H04M 1/2745

(54) **VERFAHREN ZUR ÜBERTRAGUNG VON TELEFONBUCHDATEN VON EINEM MOBILTELEFON ZU EINEM EXTERNEN GERÄT UND EXTERNES GERÄT**
METHOD FOR TRANSMITTING TELEPHONE BOOK DATA FROM A MOBILE TELEPHONE TO AN EXTERNAL APPLIANCE, AND EXTERNAL APPLIANCE
PROCEDE POUR LA TRANSMISSION DE DONNEES DE REPERTOIRE TELEPHONIQUE D'UN TÉLEPHONE MOBILE A UN APPAREIL EXTERNE ET APPAREIL EXTERNE

(30) Priorität: 08.03.2006 DE 102006010611
(43) Veröffentlichungstag der Anmeldung: 19.11.2008
(73) Patentinhaber: Bayerische Motoren Werke Aktiengesellschaft, 80809 München (DE)
(72) Erfinder: SYKORA, Thomas, 81247 München (DE); HNEINI, Nizar, 80937 München (DE); VILLIERS, Nicolas, 80634 München (DE)
(74) Vertreter: Mayer-Martin, Christian
(86) Internationale Anmeldenummer: PCT/EP2007/001260
(87) Internationale Veröffentlichungsnummer: WO 2007/101524

(56) Entgegenhaltungen:
- EP-A- 1 261 172
- WO-A-02/089449
- WO-A-2005/046190
- DE-A1-102005 026 694
- DE-U1-202004 014 643

## Beschreibung

Die Erfindung betrifft ein Verfahren zur Übertragung von Telefonbuchdaten von einem Mobiltelefon zu einem externen Gerät und ein entsprechend eingerichtetes externes Gerät, insbesondere eine Kraftfahrzeugfreisprecheinrichtung oder ein Steuergerät in einem Kraftfahrzeug.

Die weiter rasante Verbreitung der Mobilfunktechnik führte in den letzten Jahren unter anderem zur Entwicklung und Bereitstellung von Kraftfahrzeugfreisprecheinrichtungen, welche mit Mobiltelefonen zusammenwirken. Als besonders fortgeschritten gelten dabei Kraftfahrzeugfreisprecheinrichtungen, welche schnurlos, insbesondere basierend auf dem so genannten Bluetooth-Standard, mit einem Mobiltelefon, das sich insbesondere im Fahrzeug oder in der Nähe des Fahrzeuges befindet, zusammenwirken oder kommunizieren.

Dazu ist es bekannt, dass eine Kraftfahrzeugfreisprecheinrichtung automatisch eine Bluetooth-Verbindung zu einem der Kraftfahrzeugfreisprecheinrichtung zugeordneten Mobiltelefon aufbaut oder umgekehrt, sobald sich das Mobiltelefon in der Reichweite der Kraftfahrzeugfreisprecheinrichtung befindet und umgekehrt. Über die Bluetooth-Verbindung können dann das Mobiltelefon und die Kraftfahrzeugfreisprecheinrichtung Daten austauschen. Durch den Austausch von Sprachdaten kann die Sprachkommunikation basierend auf der Kraftfahrzeugfreisprecheinrichtung und dem Mobiltelefon über ein Mobilfunksystem realisiert werden. Durch den Austausch von Steuerdaten kann die Steuerung des Mobiltelefons durch eine Benutzerschnittstelle eines Kraftfahrzeuges realisiert werden. Die Dokumente EP 1 261 172, WO 02/089449 und DE 20 2004 014 643U beschreiben den Austausch von Telefonbuchdaten über eine solche Bluetooth-Verbindung.

Der Erfindung liegt nun die Aufgabe zu Grunde, eine technische Lehre anzugeben, mit welcher das Zusammenwirken zwischen einem Mobiltelefon und einem externen Gerät, wie beispielsweise einer Kraftfahrzeugfreisprecheinrichtung, verbessert wird. Diese Aufgabe wird durch die Merkmale der unabhängigen Ansprüche gelöst. Vorteilhafte Weiterbildungen der Erfindung sind den abhängigen Ansprüchen zu entnehmen. Im Rahmen der Erfindung liegen dabei auch Weiterbildungen des unabhängigen Geräteanspruchs, die den abhängigen Verfahrensansprüchen entsprechen.

Die Erfindung basiert zunächst auf der Erkenntnis, dass die Übertragung von Telefonbuchdaten über eine Bluetooth-Verbindung von einem Mobiltelefon zu einem externen Gerät in bestimmten Fällen oder beim Einsatz bestimmter Mobiltelefontypen scheitert. Dies trifft insbesondere dann zu, wenn zur Übertragung der Telefonbuchdaten über eine Bluetooth-Verbindung von einem Mobiltelefon zu einem externen Gerät Befehle und Abläufe verwendet werden, die zumindest teilweise nicht im Bluetooth-Standard festgelegt sind.

Es stellte sich bei speziellen Analysen heraus, dass die Übertragung der Telefonbuchdaten insbesondere dann scheitert, wenn das externe Gerät, das Fahrzeug oder die Kraftfahrzeugfreisprecheinrichtung bereits eingeschaltet ist, wenn das Mobiltelefon in der Reichweite des externen Gerätes eingeschaltet wird.

Aufwändige Untersuchungen ergaben, dass der Grund hierfür darin liegt, dass in bestimmten Fällen auf der Seite des externen Gerätes bereits eine Anforderung von Telefonbuchdaten vom Mobiltelefon ausgelöst wird, ehe ein Teilnehmeridentifizierungsmodul (SIM), auf dem die Telefonbuchdaten abgespeichert sind, initialisiert wurde. Ohne Initialisierung des Teilnehmeridentifizierungsmoduls scheitert aber die normalerweise auf die Anforderung folgende Übertragung der Telefonbuchdaten.

Daher basiert die Erfindung auf dem Gedanken, eine Anforderung der Telefonbuchdaten durch das externe Gerät erst durchzuführen, nachdem das Teilnehmeridentifizierungsmodul initialisiert worden ist. Die Initialisierung des Teilnehmeridentfizierungsmoduls wird automatisch nach der Registrierung des Möbiltelefons in einem Mobilfunksystem durchgeführt. Es wurde erkannt, dass das externe Gerät den Registrierungsstatus des Mobiltelefons in einem Mobilfunksystem abfragt.

Daher schlägt die Erfindung insbesondere vor, dass Telefonbuchdaten, welche insbesondere in einem Teilnehmeridentifizierungsmodul des Mobiltelefons abgespeichert sind, erst nach Ablauf einer vorgegebenen Zeitdauer seit der Signalisierung oder Abfrage der Registrierung des Mobiltelefons automatisch durch das externe Gerät von dem Mobiltelefon angefordert werden. Die vorgegebene Zeitdauer ist dazu vorzugsweise größer als die Dauer zwischen Registrierung des Mobiltelefons in einem Mobilfunksystem und abgeschlossener Initialisierung des Teihehmeridentifizierungsmoduts und liegt vorzugsweise zwischen 0,5 und 3 Sekunden.

Dadurch wird gewährleistet, dass ein externes Gerät, insbesondere eine Kraftfahrzeugsfreisprecheinrichtung, Telefonbuchdaten in vielen Fällen fehlerlos von einer Vielzahl verschiedener Mobiltelefontypen herunterladen kann. Dadurch wird die Akzeptanz von Bluetooth-Kraftfahrzeugfreisprecheinrichtungen bei Kunden deutlich erhöht.

Bei dem Mobilfunksystem handelt es sich vorzugsweise um ein GSM (Global System for Mobile Communications)-Mobilfunksystem und bei dem Mobiltelefon handelt es sich vorzugsweise um ein GSM-Mobiltelefon.

Vorzugsweise wird in dem externen Gerät nach dem Empfang der Signalisierung der Registrierung oder des Registrierungsstatus des Mobiltelefons eine Zeitmessung gestartet. Durch das externe Gerät werden Telefonbuchdaten von dem Mobiltelefon angefordert, sobald die gemessene Zeitdauer einen vorgegebenen Schwellwert überschreitet.

Vorzugsweise werden die Telefonbuchdaten in Gruppen von Telefonbucheinträgen durch das externe Gerät angefordert und darauf in entsprechenden Gruppen von dem Mobiltelefon an das externe Gerät übertragen.

Es stellte sich heraus, dass in bestimmten Fällen die erste Gruppe von Telefonbucheinträgen nicht übertragen wird. Nach einer besonders bevorzugten Ausführungsform, welche auch als solche - insbesondere unabhängig von der soeben beschriebenen verzögerten Anforderung der Telefonbuchdaten durch das externe Gerät - eine eigenständige Erfindung darstellt, wird daher insbesondere auf der Seite des externen Gerätes ermittelt, ob eine durch das externe Gerät angeforderte Gruppe von Telefonbucheinträgen an das externe Gerät übertragen wurde. Es wird eine Gruppe von Telefonbucheinträgen erneut angefordert, wenn eine durch das externe Gerät angeforderte Gruppe von Telefonbucheinträgen nicht an das externe Gerät übertragen wurde.

Dadurch wird gewährleistet, dass das auf dem Teilnehmeridentifizierungsmodul des Mobiltelefons gespeicherte Telefonbuch komplett zu dem externen Gerät übertragen wird.

Vorzugsweise wird dazu mit der ersten oder erneuten Anforderung einer Gruppe von Telefonbucheinträgen ein Zähler gestartet, der mit jeder Anforderung der Gruppe von Telefonbucheinträgen inkrementiert wird. Es wird eine Gruppe von Telefonbucheinträgen solange erneut angefordert bis der Zähler einen vorgegebenen Schwellwert erreicht hat, oder bis die Gruppe von Telefonbucheinträgen an das externe Gerät übertragen wurde.

Die genannte Aufgabe wird auch gelöst durch ein externes Gerät, insbesondere eine Kraftfahrzeugfreisprecheinrichtung, ein Steuergerät in einem Kraftfahrzeug, einen persönlichen digitalen Assistenten, ein weiteres Mobiltelefon oder einen Personal Computer, mit einer Bluetooth-Übertragungseihrichtung zum Aufbauen einer Bluetooth-Verbindung zu einem Mobiltelefon und mit einer Steuereinrichtung, die derart eingerichtet ist, dass durch das externe Gerät eine durch das Mobiltelefon signalisierte Registrierung des Mobiltelefons in einem Mobilfunksystem empfangen wird, dass durch das externe Gerät nach Ablauf einer vorgegebenen Zeitdauer seit dem Empfang oder der Verarbeitung der Signalisierung der Registrierung des Mobiltelefons in einem Mobilfunksystem Telefonbuchdaten von dem Mobiltelefon angefordert werden, und dass von dem Mobiltelefon übertragene Telefonbuchdaten von dem externen Gerät empfangen und gespeichert werden.

Das externe Gerät kann eine Steuereinrichtung sein oder umfassen, welche als programmgesteuerte Prozessoreinrichtung oder als anwendungsspezifische integrierte Schaltung ausgeführt sein kann. Die Steuereinrichtung ist insbesondere zur Steuerung wesentlicher Komponenten des-externen Gerätes und zur Steuerung oder Ausführung der Schritte der im Rahmen der Erfindung liegenden Verfahren programmtechnisch entsprechend eingerichtet.

Im Folgenden wird die Erfindung anhand von Beispielen unter Bezugnahme auf die folgende Figur näher erläutert:

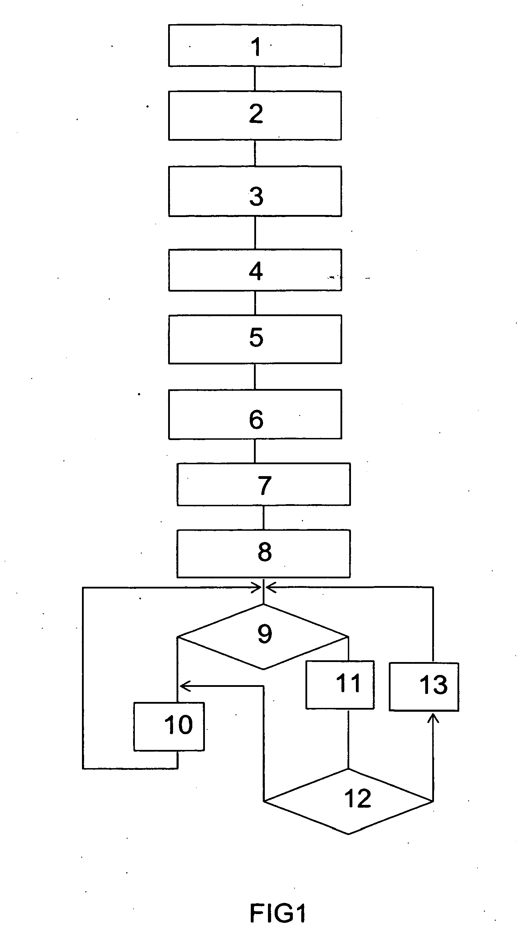

- Figur 1: zeigt ein vereinfachtes Ablaufdiagramm eines Verfahrens zur Übertragung von Telefonbuchdaten von einem Mobiltelefon zu einem externen Gerät.

In einem ersten Schritt 1 wird bei eingeschalteter Kraftfahrzeugfreisprecheinrichtungen, welche eine Bluetooth-Übertragungseinrichtung und eine Steuereinrichtung umfasst, ein der Kraftfahrzeugfreisprecheinrichtung zugeordnetes Mobiltelefon, welches sich in der Reichweite der Kraftfahrzeugfreisprecheinrichtung befindet, eingeschaltet.

Nach geeigneten Synchronisations- und Identifikationsschritten wird in einem zweiten Schritt 2 automatisch eine Bluetooth-Verbindung zwischen dem Mobiltelefon und dem externen Gerät aufgebaut.

In einem dritten Schritt 3 wird durch den Fahrer oder Nutzer eine Geheimzahl in das Mobiltelefon eingegeben, wodurch eine Registrierung oder Einbuchung des Mobiltelefons in ein verfügbares Mobilfunksystem in einem vierten Schritt 4 ausgelöst wird.

In einem fünften Schritt 5 wird die erfolgreiche Registrierung oder Einbuchung des Mobiltelefons in ein verfügbares Mobilfunksystem von dem Mobiltelefon an die Kraftfahrzeugfreisprecheinrichtung signalisiert.

Diese Signalisierung der erfolgreichen Registrierung oder Einbuchung des Mobiltelefons löst in einem sechsten Schritt 6 den Start einer Zeitmessung auf der Seite der Kraftfahrzeugfreisprecheinrichtung aus.

In einem siebten Schritt 7 wird das Teilnehmeridentifizierungsmodul (SIM) des Mobiltelefons automatisch initialisiert.

Nach dem Ablauf einer vorgegebenen Zeitdauer von 2 Sekunden seit dem Empfang oder der Verarbeitung der Signalisierung der erfolgreichen Registrierung oder Einbuchung des Mobiltelefons werden in einem achten Schritt 8 durch die Kraftfahrzeugfreisprecheinrichtung mittels einer geeigneten Anforderungsnachricht automatisch Telefonbuchdaten in Form von Gruppen von Telefonbucheinträgen - beginnend mit einer ersten Gruppe - von dem Mobiltelefon angefordert.

In einem neunten Schritt 9 wird auf der Seite der Kraftfahrzeugfreisprecheinrichtung untersucht, ob die Übertragung der angeforderten Gruppe von Telefonbucheinträgen erfolgreich war oder gescheitert ist.

War die Übertragung einer angeforderten Gruppe von Telefonbucheinträgen erfolgreich, wird in einem zehnten Schritt 10 die nächste Gruppe von Telefonbucheinträgen angefordert und das Verfahren mit dem neunten Schritt 9 entsprechend fortgesetzt.

Ist die Übertragung einer Gruppe von Telefonbucheinträgen gescheitert, wird in einem elften Schritt 11 ein Zähler inkrementiert, welcher die gescheiterten Übertragungen dieser Gruppe von Telefonbucheinträgen zählt.

In einem zwölften Schritt 12 wird auf der Seite der Kraftfahrzeugfreisprecheinrichtung untersucht, ob der Zählerwert einen vorgegeben Schwellwert überschreitet.

Überschreitet der Zählerwert einen vorgegeben Schwellwert, wird das Verfahren mit dem zehnten Schritt 10 entsprechend fortgesetzt. Andernfalls wird in einem Schritt 13 die gleiche Gruppe von Telefonbucheinträgen noch einmal angefordert und das Verfahren mit dem neunten Schritt 9 entsprechend fortgesetzt.

## Patentansprüche

1. Verfahren zur Übertragung von Telefonbuchdaten von einem Mobiltelefon zu einem externen Gerät,
- bei dem eine Bluetooth-Verbindung zwischen dem Mobiltelefon und dem externen Gerät aufgebaut wird (2),
- bei dem das Mobiltelefon in einem Mobilfunksystem registriert wird (4),
- bei dem dem externen Gerät die Registrierung des Mobiltelefons in dem Mobilfunksystem über die Bluetooth-Verbindung signalisiert wird (5),
- bei dem durch das externe Gerät nach Ablauf einer vorgegebenen Zeitdauer seit der Signalisierung der Registrierung des Mobiltelefons Telefonbuchdaten von dem Mobiltelefon angefordert werden (8), und
- bei dem Telefonbuchdaten von dem Mobiltelefon zu dem externen Gerät übertragen werden.

2. Verfahren nach Anspruch 1,
bei dem das Mobilfunksystem und das Mobiltelefon gemäß dem GSM-Standard oder gemäß einem davon abgeleiteten Mobilfunkstandard funktionieren.

3. Verfahren nach Anspruch einem der vorhergehenden Ansprüche,
bei dem in dem externen Gerät nach dem Empfang der Signalisierung der Registrierung des Mobiltelefons eine Zeitmessung gestartet wird (6),
bei dem durch das externe Gerät Telefonbuchdaten von dem Mobiltelefon angefordert werden, sobald eine durch die Zeitmessung gemessene Zeitdauer einen vorgegebenen Schwellwert überschreitet.

4. Verfahren nach einem der vorhergehenden Ansprüche,
bei dem Telefonbuchdaten in Gruppen von Telefonbucheinträgen angefordert werden (8),
bei dem ermittelt wird, ob eine durch das externe Gerät angeforderte Gruppe von Telefonbucheinträgen an das externe Gerät übertragen wurde (9), bei dem eine Gruppe von Telefonbucheinträgen erneut angefordert wird (13), wenn eine durch das externe Gerät angeforderte Gruppe von Telefonbucheinträgen nicht an das externe Gerät übertragen wurde.

5. Verfahren nach Anspruch 4,
bei dem mit der ersten oder mit der erneuten Anforderung einer Gruppe von Telefonbucheinträgen ein Zähler gestartet wird (11), der mit jeder Anforderung der Gruppe von Telefonbucheinträgen inkrementiert wird, und bei dem eine Gruppe von Telefonbucheinträgen solange erneut angefordert wird (13) bis der Zähler einen vorgegebenen Schwellwert erreicht hat oder die Gruppe von Telefonbucheinträgen an das externe Gerät übertragen wurde.

6. Externes Gerät, insbesondere Kraftfahrzeugfreisprecheinrichtung mit einer Bluetooth-Übertragungseinächtung zum Aufbauen einer Bluetooth-Verbindung zu einem Mobiltelefon und
mit einer Steuereinrichtung, die derart eingerichtet ist,
dass durch das externe Gerät eine durch das Mobiltelefon signalisierte Registrierung des Mobiltelefons in einem Mobilfunksystem empfangen wird, dass durch das externe Gerät nach Ablauf einer vorgegebenen Zeitdauer seit dem Empfang der Signalisierung der Registrierung des Mobiltelefons in einem Mobilfunksystem Telefonbuchdaten von dem Mobiltelefon angefordert werden, und
dass von dem Mobiltelefon übertragene Telefonbuchdaten von dem externen Gerät empfangen und gespeichert werden.

## Claims

1. A method for transmitting telephone book data from a mobile telephone to an external device,
- wherein a Bluetooth link is set up (2) between the mobile telephone and the external device,
- wherein the mobile telephone is registered (4) in a mobile radio system,
- wherein the registration of the mobile telephone in the mobile radio system is signalled (5) to the external device via the Bluetooth link,
- wherein the external device requests (8) telephone book data from the mobile telephone after a predetermined time period has elapsed since the registration of the mobile telephone was signalled, and
- wherein telephone book data are transmitted from the mobile telephone to the external device.

2. A method according to claim 1, wherein the mobile radio system and the mobile telephone function in accordance with the GSM standard or in accordance with a mobile radio standard derived therefrom.

3. A method according to any one of the preceding claims, wherein a time measurement is started (6) in the external device after the signalling of the registration of the mobile telephone has been received, wherein the external device requests telephone book data from the mobile telephone as soon as a time period measured by the time measurement exceeds a predetermined threshold value.

4. A method according to any one of the preceding claims, wherein telephone book data are requested (8) in groups of telephone book entries, wherein it is determined whether a group of telephone book entries requested by the external device was transmitted (9) to the external device, wherein a group of telephone book entries is requested again (13), if a group of telephone book entries requested by the external device was not transmitted to the external device.

5. A method according to claim 4, wherein at the first or renewed request for a group of telephone book entries, a counter is started (11), which is incremented at each request for the group of telephone book entries, and wherein a group of telephone book entries is requested again (13) until the counter has reached a predetermined threshold value or the group of telephone book entries has been transmitted to the external device.

6. An external device, more especially a motor vehicle hands-free speaking mechanism with a Bluetooth transmission mechanism for setting up a Bluetooth link to a mobile telephone and with a control mechanism, which is set up in such a way that by means of the external device, a registration of the mobile telephone signalled by the mobile telephone is received in a mobile radio system, in that once a predetermined time period has elapsed since the signalling of the registration of the mobile telephone was received in a mobile radio system, the external device requests telephone book data from the mobile telephone, and in that telephone book data transmitted from the mobile telephone are received and stored by the external device.

## Revendications

1. Procédé de transfert de données du répertoire téléphonique d'un téléphone mobile vers un appareil externe selon lequel :
- on établit une liaison Bluetooth entre le téléphone mobile et l'appareil externe (2),
- on enregistre (4) le téléphone mobile dans un système de téléphone mobile,
- on signale (5) à l'appareil externe, l'enregistrement du téléphone mobile dans le système de téléphone mobile par la liaison Bluetooth,
- on demande (8) les données du répertoire téléphonique du téléphone mobile, par l'appareil externe à la fin d'une durée prédéterminée à partir de la signalisation de l'enregistrement du téléphone mobile, et
- on transmet les données du répertoire téléphonique du téléphone mobile vers l'appareil externe.

2. Procédé selon la revendication 1,
selon lequel
le système de téléphone mobile et le téléphone mobile, fonctionnent selon le protocole GSM ou selon un protocole de téléphone mobile qui en découle.

3. Procédé selon l'une des revendications précédentes,
selon lequel
après réception de la signalisation de l'enregistrement du téléphone mobile, on démarre une mesure de temps (6) dans l'appareil externe,
et l'appareil externe demande des données de répertoire téléphonique au téléphone mobile dès qu'une durée mesurée par une mesure de temps, dépasse un seuil prédéfini.

4. Procédé selon l'une des revendications précédentes,
selon lequel
les données du répertoire téléphonique sont demandées (8) sous forme de groupes d'enregistrement de répertoire téléphonique,
selon lequel, on détermine si un groupe demandé par l'appareil externe d'enregistrement dans le repère téléphonique, a été transmis à l'appareil externe (9), et
un groupe d'enregistrement dans le repère téléphonique est de nouveau demandé (13) si un groupe demandé par l'appareil externe d'enregistrement dans le répertoire téléphonique, n'a pas été transmis à l'appareil externe.

5. Procédé selon la revendication 4,
selon lequel
par la première requête ou par une requête renouvelée, on lance un groupe d'enregistrement dans le répertoire téléphonique avec un compteur (11) incrémenté par chaque demande du groupe d'enregistrement dans un répertoire téléphonique, et
selon lequel, on demande de manière renouvelée un groupe d'enregistrement dans le répertoire téléphonique (13) jusqu'à ce que le compteur ait atteint une valeur de seuil prédéfinie ou que le groupe d'enregistrement dans le répertoire téléphonique, a été transmis à l'appareil externe.

6. Appareil externe, notamment installation de téléphone mains libres dans un véhicule automobile comportant :
- une installation de transmission Bluetooth pour établir une liaison Bluetooth vers un mobile téléphonique, et
- une installation de commande conçue pour que :
* l'appareil externe reçoive l'enregistrement du téléphone mobile signalé par le téléphone mobile, dans un système de téléphones mobiles,
* et à la fin d'une durée prédéterminée comptée depuis la réception du signalement de l'enregistrement du téléphone mobile dans le système de téléphones mobiles, l'appareil externe demande des données de répertoire téléphonique du téléphone mobile, et
- les données de répertoire téléphonique transmises à partir du téléphone mobile sont reçues et enregistrées par l'appareil externe.
